# EUROPEAN PATENT SPECIFICATION

(11) **EP 3 839 944 B1**
(45) Date of publication and mention of the grant of the patent: **02.08.2023**
(21) Application number: 20861996.5
(22) Date of filing: 07.05.2020
(51) Int. Cl.: G10L 15/22, G10L 15/30, G06F 3/16, H04L 9/40

(54) **VOICE PROCESSING METHOD AND APPARATUS, DEVICE, AND COMPUTER STORAGE MEDIUM**
SPRACHVERARBEITUNGSVERFAHREN UND -VORRICHTUNG SOWIE COMPUTERSPEICHERMEDIUM
PROCÉDÉ ET APPAREIL DE TRAITEMENT VOCAL, DISPOSITIF, ET SUPPORT DE STOCKAGE INFORMATIQUE

(30) Priority: 12.09.2019 CN 201910862398
(43) Date of publication of application: 23.06.2021
(73) Proprietor: BAIDU ONLINE NETWORK TECHNOLOGY (BEIJING) CO., LTD., Beijing 100085 (CN)
(72) Inventor: HUANG, Jizhou, Beijing 100085 (CN); DING, Shiqiang, Beijing 100085 (CN); HOU, Changshun, Beijing 100085 (CN)
(74) Representative: dompatent von Kreisler Selting Werner - Partnerschaft von Patent- und Rechtsanwälten mbB
(86) International application number: PCT/CN2020/088943
(87) International publication number: WO 2021/047193

(56) References cited:
- EP-A2- 3 480 816
- WO-A1-2019/117889
- CN-A- 101 079 885
- CN-A- 104 462 478
- CN-A- 107 196 950
- CN-A- 107 689 870
- CN-A- 108 304 153
- CN-A- 108 804 711
- CN-A- 109 617 907
- CN-A- 110 018 858
- CN-A- 110 718 218
- CN-A- 110 718 219
- US-A1- 2012 036 563
- US-A1- 2014 373 101
- US-A1- 2017 372 703
- US-A1- 2018 247 654
- US-A1- 2019 363 886

## Description

The present application claims priority to Chinese Patent Application No.201910862398.2, entitled "Method and Apparatus for Processing Voices, Device and Computer Storage Medium", filed on September 12, 2019.

### Field of the Disclosure

The present application relates to the technical field of computer applications, and particularly to a method and a system for processing voices in a voice technology.

### Background of the Disclosure

This section is intended to provide a background or context for implementations of the present disclosure which are recited in the claims. The description herein is not admitted to be the prior art by inclusion in this section.

With the rapid development of voice recognition technologies, voice assistants are favored by various mobile phone application providers and mobile phone users. The user may interact with the voice assistant by means of inputting a voice request, and after recognizing the voice request, the voice assistant performs a corresponding processing task and responds to the user.

However, when the user uses the voice assistant, it is possible that the current voice assistant is unable to well handle the voice request input by the user, but other voice assistants in the same terminal device are able to well handle this voice request. Currently, a mechanism for responding to the voice request by a mutual call between the voice assistants is lacked.

A patent application US2017/372703A1, published on December 28, 2017, entitled "Asynchronous processing of user requests", describes determining an action corresponding to the user request, and if is determined that the action is classified as an action to be performed asynchronously to the user request, a confirmation message is sent, for output, and the action is performed asynchronously to the user request.

A patent application US2014373101A1, published on December 18, 2014, entitled "Sending session tokens through passive clients", describes a process comprising the steps of requesting a proof token to be sent to a first computing service from a second computing service; the first computing service receiving a proof key with the requested proof token from the second computing service; and the first computing service sending a message comprising the proof token through a passive client to the second computing service.

A patent application WO2019117889A1, published on June 20, 2019, entitled "Mechanism for achieving mutual identity verification via one-way application-device channels", describes a method of authenticating a service request. A client application receives a push notification with a second nonce from the second server via a secure and authenticated communication channel. The client application performs an operation on the nonces to generate a candidate result, and sends to the first server. If the candidate result matches the stored result, the first server will send the client application a token that grants access to a service.

A patent application US2018247654A1, published on August 30, 2018, entitled "Device identifier dependent operation processing of packet based data communication", describes a system to provide network communications between devices to process an operation. A link generation component can determine whether the client computing device has an account or a record in a database associated with the service provider device.

A patent application EP3480816A2, published on May 8, 2019, entitled "Method for voice recognition and electronic device for performing same", describes a method for recognizing voice. The method comprises: executing a function corresponding to the utterance in response to the voice information, using at least one of a first application and a second application based at least partly on a first information and a second information.

### Summary of the Disclosure

In view of this, the present application provides a method and a system for processing voices, so as to implement a mutual call between voice assistants to respond to a voice request.

The invention is set out in the appended set of claims.

An embodiment of the above-mentioned application has the following advantages.
1) With the present application, a mechanism of a mutual call between the voice assistants based on the token information is provided to realize the response to the voice request input by a user, such that after the user inputs the voice request with the first voice assistant, the first voice assistant may call the second voice assistant to respond to the voice request when the second voice assistant may better respond to the voice request.
2) A token-based checking mechanism provided by the server of the second voice assistant may prevent a false response caused by an error call of the client of the second voice assistant by the client of the first voice assistant, and may also prevent the client of a malicious first voice assistant from calling the client of the second voice assistant for an attack, thereby improving reliability and safety.
3) The server of the second voice assistant may use a token to perform a frequency control processing operation, which may prevent malicious attacks caused when an illegal client counterfeits a request.
4) The server of the second voice assistant may count the number of times of replacing the first voice assistant to respond to the text request by recording a corresponding relationship between the token and the first voice assistant, and use this result as a charging basis for the first voice assistant.
5) In the present application, the server of the first voice assistant sends the text request to the servers of the other voice assistants, and the information of the second voice assistant is determined from the server of the other voice assistant returning the acknowledgment information for the call, thereby providing a specific way of determining the second voice assistant which is able to process the voice request, such that the response to the voice request is more accurate.

Other effects of the above-mentioned alternatives will be described below in conjunction with embodiments.

### Brief Description of Drawings

Fig. 1 shows an exemplary system architecture to which a method or apparatus for processing voices according to embodiments of the present application may be applied;
Fig. 2 is a flow chart of a main method according to an embodiment of the present application;
Fig. 3 is a flow chart of an improved method according to an embodiment of the present application;
Figs. 4a-4b are diagrams of a first example of an interface according to the present application;
Figs. 5a-5d are diagrams of a second example of the interface according to the present application;
Fig. 6 is a schematic diagram of an apparatus for processing voices provided at a server of a first voice assistant according to an embodiment of the present application;
Fig. 7 is a schematic diagram of an apparatus for processing voices provided at a client of the first voice assistant according to an embodiment of the present application;
Fig. 8 is a schematic diagram of an apparatus for processing voices provided at a client of a second voice assistant according to an embodiment of the present application;
Fig. 9 is a schematic diagram of an apparatus provided at a server of the second voice assistant according to an embodiment of the present application; and
Fig. 10 is a block diagram of an electronic device configured to implement the methods for processing voices according to the embodiments of the present application.

### Detailed Description of Preferred Embodiments

The following part will illustrate exemplary embodiments of the present application with reference to the figures, including various details of the embodiments of the present application for a better understanding. The embodiments should be regarded only as exemplary ones.

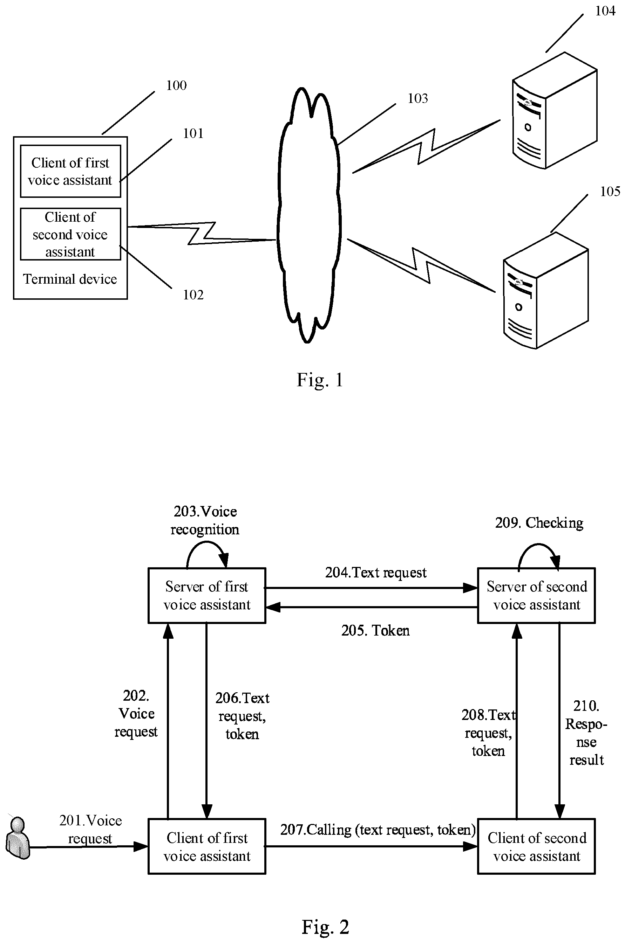

Fig. 1 shows an exemplary system architecture to which a method or apparatus for processing voices according to embodiments of the present application may be applied.

As shown in Fig. 1, the system architecture includes a client 101 of a first voice assistant and a client 102 of a second voice assistant in a terminal device 100, a network 103, a server 104 of the first voice assistant, and a server 105 of the second voice assistant. The network 103 serves as a medium for providing communication links between the terminal device 100 and the servers 104, 105. The network 103 may include various connection types, such as wired and wireless communication links, or fiber-optic cables, or the like.

A user may use the terminal device 100 to interact with the servers 104, 105 through the network 103. Various clients may be installed on the terminal device 100, and in addition to the voice-assistant client shown in Fig. 1, a client, such as a web browser, a communication application, or the like, may be installed. In addition, it should be noted that the number of the voice-assistant clients in the terminal device 100 shown in the present application is only illustrative, is not limited to two, and may be more than two. The voice-assistant client in the present application may be configured as a client having only a voice assistant function, or a client in which a voice assistant function and other functions are fused, for example, a map application client with a voice assistant function, a search application client with a voice assistant function, a video playing client with a voice assistant function, or the like. The client may be configured as a built-in client of an operating system or a client installed by the user.

The terminal device 100 may be configured as various electronic devices supporting voice interaction, and may be configured as a screen device or a non-screen device, including, but not limited to, smart phones, tablets, intelligent loudspeaker boxes, smart televisions, or the like. The apparatus for processing voices according to the present application may be provided and run in the above-mentioned terminal device 100. The apparatus may be implemented as a plurality of pieces of software or a plurality of software modules (for example, for providing distributed service), or a single piece of software or a single software module, which is not specifically limited herein.

Each of the servers 104, 105 may be configured as a single server or a server group including a plurality of servers. In the present application, the servers 104, 105 are configured to receive and respond to information from respective clients, and information interaction also exists between the servers 104, 105.

It should be understood that the numbers of the terminal devices, the network, and the server in Fig. 1 are merely schematic. There may be any number of terminal devices, networks and servers as desired for an implementation.

In the prior art, when the user uses the first voice assistant, after the client of the first voice assistant sends a voice request input by the user to the server of the first voice assistant, the server of the first voice assistant is responsible for performing voice recognition and an instruction parsing operation on the voice request, the voice recognition includes recognizing the voice request into a text request, and the instruction parsing operation includes parsing the text request into a task instruction in conjunction with a preset parsing policy. Then, a corresponding task processing operation is performed according to the task instruction. Usually, the instruction parsing operation is deeply related to a specific field, and only a specialized voice assistant in the related field may well perform the instruction parsing operation on a text request in this field.

For example, when using a built-in voice assistant of a mobile phone system, the user inputs a voice request "going to the multicolored city first and then to the Tsinghua university", but after the voice request is recognized into a text, the built-in voice assistant of the mobile phone system has difficulty in converting the text into a correct task instruction. The text is parsed into a task instruction "initiating route retrieval with the Tsinghua university as a destination", but the passing multicolored city is lost. Even if the built-in voice assistant of the mobile phone system calls a client of a navigation or map application in response to the task instruction, and the navigation or map client executes the task instruction, requirements of the user are unable to be met correctly.

After research, the inventor of the present application finds that usually, the voice assistant is able to well complete a catching link (that is, a voice instruction may be well recognized into a text instruction), but a client of a more specialized voice assistant is required in an understanding link (that is, the text instruction is parsed into the task instruction). In view of this, the core idea of the present application is that when the user inputs the voice request using the first voice assistant, the catching link is still performed by the first voice assistant, but the understanding link and a performing link are performed by the second voice assistant which is able to process the text request corresponding to the voice request. The method according to the present application will be described below in conjunction with embodiments.

Fig. 2 is a flow chart of a main method according to an embodiment of the present application, and the method has an application scenario that at least a client of a first voice assistant and a client of a second voice assistant are installed in a terminal device used by a user. As shown in Fig. 2, the method may include the following steps:
In 201, receiving, by the client of the first voice assistant, a voice request input by the user.

In this step, the user inputs the voice request when using the client of the first voice assistant, or the first voice assistant is activated by a wakeup word used when the user inputs the voice request, such that the client of the first voice assistant receives the voice request input by the user.

For example, assuming that the user inputs the voice request by pressing a record button while using the client of the first voice assistant, the client of the first voice assistant receives the voice request input by the user.

For another example, assuming that the user starts a client of a built-in voice assistant of a system and inputs the voice request while using a mobile phone, the client of the built-in voice assistant of the system receives the voice request.

For another example, assuming that the user inputs the voice request "Duer..." while using the Baidu map, the wakeup word "Duer" awakes a built-in voice assistant of the Baidu map, and a client of the Baidu map receives the voice request input by the user.

Certainly, this step is also applicable to other scenarios which are not enumerated here.

In 202, sending the voice request to a server of the first voice assistant by the client of the first voice assistant.

In 203, recognizing the voice request by the server of the first voice assistant to obtain a corresponding text request.

Currently, most voice assistants may well perform voice recognition, and therefore, after receiving the voice request, the server of the first voice assistant recognizes the voice request to obtain the corresponding text request.

In 204, sending the text request to a server of the second voice assistant by the server of the first voice assistant.

This step is implemented on the premise that the server of the first voice assistant determines information of the second voice assistant which is able to process the text request. Specifically, any determination way may be adopted, including, but is not limited to:
the first manner: the server of the first voice assistant recognizes the field of the text request, and then determines information of the voice assistant corresponding to the recognized field as the information of the second voice assistant. For example, the filed of the text request is determined by simple keyword or semantic-based analysis of the text request.

As one implementation, the server of the first voice assistant may be preconfigured with information of other cooperative voice assistants, and then determine the information of the second voice assistant from these voice assistants.

As another implementation, the client of the first voice assistant may scan an information list of voice assistants installed in the terminal device. Corresponding information may be adopted in an installation package to indicate voice assistant information of a client of each voice assistant in the terminal device, and the client of the first voice assistant may determine the clients of the voice assistants installed in the terminal device with the installation package in the terminal device, thereby obtaining the information list of the installed voice assistants. Then, the client of the first voice assistant may upload the information list of the voice assistants to the server of the first voice assistant. The information list may be uploaded when the client of the first voice assistant is started, while the voice request is sent, or before the voice request is sent. The server of the first voice assistant may determine the information of the second voice assistant according to the information list of the voice assistants uploaded by the client of the first voice assistant.

The second manner: the server of the first voice assistant sends the text request to a server of at least one other voice assistant, and the server of the other voice assistant replies acknowledgment information if judging that the server is able to handle the text request. The server of the first voice assistant selects one of the servers of the voice assistants replying the acknowledgment information as the server of the second voice assistant.

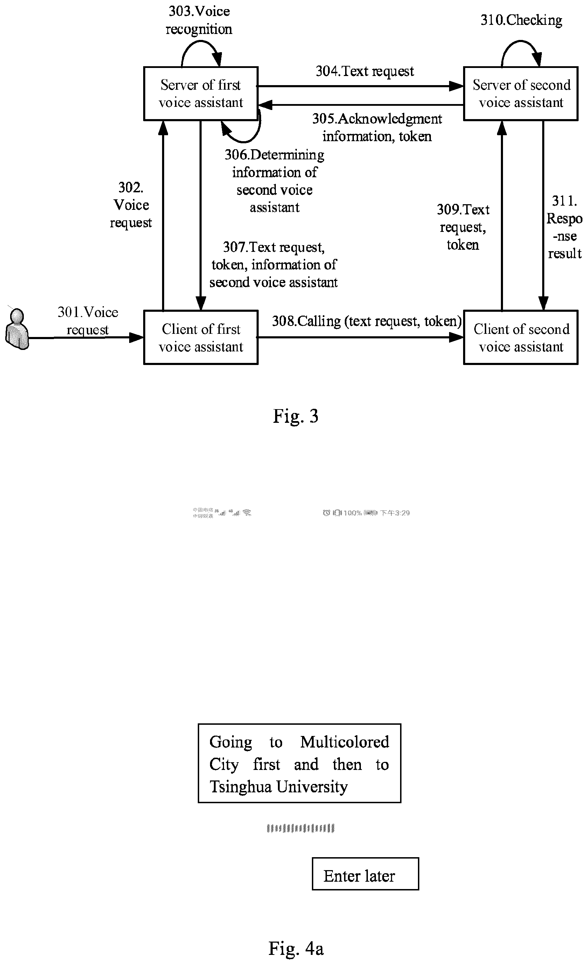

The second manner will be described in detail in an embodiment shown in Fig. 3.

In addition to the above-mentioned two ways, other ways are possible. For example, the terminal device used by the user only has the clients of the first and second voice assistants. The server of the first voice assistant sends the text request to the second voice assistant when determining that the server is unable to handle the text request. Whether the server of the first voice assistant is able to handle the text request may be judged according to the field of the server, for example, the field of the text request is determined by simply analyzing the text request based on keywords or semantics, and whether the field of the text request is consistent with the field of the server is judged, if yes, it is considered that the server is able to process the text request, otherwise, it is considered that the server is unable to process the text request. Other field recognition ways may be adopted.

In 205, by the server of the second voice assistant, generating a token for the text request, and returning the token to the server of the first voice assistant.

In this step, the token may be generated by encrypting random information using a key and an encryption method known only to the server, so as to obtain the token, as long as the uniqueness of the token in the validity period is guaranteed and the token is difficult to crack by other devices.

In 206, sending the text request and the token to the client of the first voice assistant by the server of the first voice assistant.

In 207, calling, by the client of the first voice assistant, the client of the second voice assistant to respond to the text request, and transferring the text request and the token during the call.

In this step, if the terminal device only has the clients of the two voice assistants, the server of the first voice assistant is not required to transfer the information of the second voice assistant to the client of the first voice assistant in 206.

However, more generally, the server of the first voice assistant sends the determined information of the second voice assistant to the client of the first voice assistant in 206, such that the client of the first voice assistant calls the client of the corresponding second voice assistant in 207.

In 208, sending the text request and the token to the server of the second voice assistant by the client of the second voice assistant.

In 209, checking, by the server of the second voice assistant, the text request with the token, and if the check is passed, responding to the text request.

In this step, the server of the second voice assistant may perform the check using the received token and the token generated for the text request to determine whether the two tokens are consistent, and if yes, the check is passed, otherwise, the check fails.

If the check is passed, the server of the second voice assistant responds to the text request.

If the check fails, the server of the second voice assistant does not respond to the text request, or returns check failure or response failure information to the client of the second voice assistant.

2) The above-mentioned token-based check may prevent a false response caused by an error call of the client of the second voice assistant by the client of the first voice assistant, and may also prevent the client of a malicious first voice assistant from calling the client of the second voice assistant for an attack. For example, if the client of the malicious first voice assistant calls the client of the second voice assistant to send an offensive text request for multiple times, since the client of the malicious first voice assistant is unable to know the token, the server of the second voice assistant does not respond to the malicious text request.

In addition to being used for the check, the token may be used for at least one of frequency control and/or a charging operation in the present application.

When the token is used for frequency control, if the client of the second voice assistant frequently sends text requests and tokens to the server of the second voice assistant, but the check of the tokens fails, that is, if the number of the requests which are sent by the client of the second voice assistant and do not pass authentication exceeds a preset threshold within a set time, the client of the second voice assistant may be placed into a blacklist. The server of the second voice assistant discards all the requests sent by the client in the blacklist and does not respond. By such a frequency control way, malicious attack behaviors may be prevented.

When the token is used for the charging operation, the server of the second voice assistant counts the number of times of replacing the first voice assistant to respond to the text request by recording a corresponding relationship between the token and the first voice assistant, and use this result as a charging basis for the first voice assistant. Specifically, the server of the second voice assistant counts the number of responses corresponding to the first voice assistant in the responses to the text request based on the corresponding relationship, and charges the first voice assistant based on the number of responses.

In 210, returning the response result to the client of the second voice assistant by the server of the second voice assistant.

Fig. 3 is a flow chart of an improved method according to the embodiment of the present application, and as shown in Fig. 3, the method includes the following steps:
steps 301 to 303 which are the same as steps 201 to 203 in Fig. 2.

In 304, sending the text request to a server of at least one other voice assistant by the server of the first voice assistant.

Before this step, the server of the first voice assistant first determines whether the server is able to process the text request, and if yes, directly respond to the text request, that is, parse the text request to obtain a task instruction. The subsequent process is the same as the prior art. If the server is unable to process the text request, the step of distributing the text request to the server of the other voice assistant is executed.

Whether the text request is able to be processed may be judged according to the field of the text request or according to acknowledgement information from the server of the second voice assistant. The field of the text request is determined by simply analyzing the text request based on keywords or semantics, and whether the field of the text request is consistent with the field of the server is judged, if yes, it is considered that the server is able to process the text request, otherwise, it is considered that the server is unable to process the text request. Other field recognition ways may be adopted.

As one implementation, the server of the first voice assistant may be preconfigured with information of other cooperative voice assistants, and then send the text request to the servers of these voice assistants respectively.

As another implementation, the client of the first voice assistant may scan an information list of voice assistants installed in the terminal device. Corresponding information may be adopted in an installation package to indicate voice assistant information of a client of each voice assistant in the terminal device, and the client of the first voice assistant may determine the clients of the voice assistants installed in the terminal device with the installation package in the terminal device, thereby obtaining the information list of the installed voice assistants. Then, the client of the first voice assistant may upload the information list of the voice assistants to the server of the first voice assistant. The information list may be uploaded when the client of the first voice assistant is started, while the voice request is sent, or before the voice request is sent. In this step, the server of the first voice assistant may send the text request to the servers of the voice assistants in the list according to the information list of the voice assistants uploaded by the client of the first voice assistant.

In 305, after determining that the server of each other voice assistant is able to process the text request, generating a token for the text request, and returning acknowledgment information and the token to the server of the first voice assistant.

The server of each other voice assistant receiving the text request may also determine whether the server is able to process the text request in the above-mentioned manner based on the field recognition. After determining that the server is able to process the text request, the server returns the acknowledgment information to the server of the first voice assistant. If the server determines that the server is unable to process the text request, no response may be generated, or negative acknowledgment information may be returned to the server of the first voice assistant.

In this step, the token may be generated by encrypting random information using a key and an encryption method known only to the server, so as to obtain the token, as long as the uniqueness of the token in the validity period is guaranteed and the token is difficult to crack by other devices.

In 306, determining, by the server of the first voice assistant, information of the second voice assistant from the server returning the acknowledgment information. Only aspects of the client and the server of the second voice assistant are shown in Fig. 3, and the other voice assistants are not shown.

This step is actually the process of determining the target voice assistant which is referred to as the second voice assistant in this embodiment, if only one server of the other voice assistant which returns the acknowledgment information exists, the information of the voice assistant corresponding to the server is directly determined as the information of the second voice assistant, for example, the information may be embodied as the identification, the name, or the like, of the second voice assistant.

If a plurality of servers of the other voice assistants which return the acknowledgment information exist, the information of the voice assistant corresponding to one of the servers may be selected as the information of the second voice assistant. The one server may be selected at random or according to a preset priority order. The setting policy of the priority order is not limited in the present application.

In addition, if none of the servers of all the voice assistants returns the acknowledgment information, the server of the first voice assistant may respond to the text request by itself.

In 307, sending the text request, the token and the information of the second voice assistant to the client of the first voice assistant by the server of the first voice assistant.

In 308, according to the information of the second voice assistant, calling, by the client of the first voice assistant, the client of the second voice assistant to respond to the text request, and transferring the text request and the token during the call.

If the server of the first voice assistant distributes the text request based on the cooperative relationship in step 304, the selected second voice assistant may face the problem that the second voice assistant is not installed in the terminal device where the client of the first voice assistant is located, and in this case, the client of the first voice assistant may fail to call, and at this moment, the client of the first voice assistant may return information indicating that the voice request is unable to be processed to the user.

Based on the above-mentioned situation, in the above-mentioned step 304, it is preferable that the server of the first voice assistant distributes the text request and selects the information of the second voice assistant based on the information list of the voice assistants uploaded by the client of the first voice assistant. Thus, the second voice assistant is certainly installed in the terminal device, and when calling the client of the second voice assistant, the client of the first voice assistant transfers the text request to the client of the second voice assistant. The call between the clients of the two voice assistants may adopt an interprocess communication mode, which is not the focus of the present application and not described in detail here.

In 309, sending the text request and the token to the server of the second voice assistant by the client of the second voice assistant.

In 310, checking, by the server of the second voice assistant, the text request with the token, and if the check is passed, responding to the text request.

The responding to the text request at least includes: parsing the text request to obtain the task instruction. Further, the server of the second voice assistant may directly execute a corresponding task processing operation according to the task instruction, and return a processing result to the client of the second voice assistant. Or, a client of a non-voice assistant executing the task instruction may be determined, and information of the client of the non-voice assistant is returned to the client of the second voice assistant together with the text request, such that the client of the second voice assistant calls the client of the non-voice assistant to execute the task instruction. The server of the second voice assistant may respond to the text request in a response way in the prior art, which is not limited in the present application.

That is, the server of the second voice assistant performs parsing and subsequent processing operations on the text request according to a parsing policy in the specialized field, thereby completing the catching and performing links. Moreover, the whole processing process of the text request by the second voice assistant is invisible to the first voice assistant, and the first voice assistant only knows that the second voice assistant is able to process the text request, but does not know how the second voice assistant processes the text request, which maintains the independence between the two voice assistants.

In 311, returning the response result to the client of the second voice assistant by the server of the second voice assistant.

Two examples in which the above-mentioned method is adopted are listed below.

### First Example

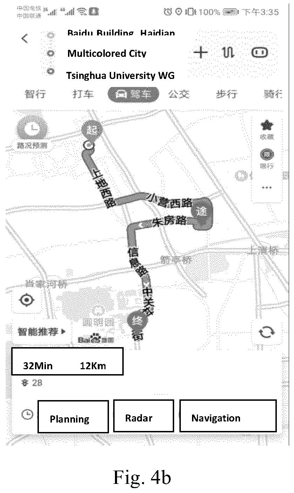

A user inputs a voice request "Going to the Multicolored City first and then to the Tsinghua university" using a client of a built-in voice assistant of an operating system of a mobile phone, as shown in Fig. 4a. The client of the voice assistant sends the voice request to a server. In addition, the client of the built-in voice assistant of the operating system sends an information list of voice assistants installed on the mobile phone to the server when started. After parsing the voice request into a text request, the server sends the text request to a server of each voice assistant in the information list of the voice assistants, for example, a server of a map application, a server of a video application, or the like. After the server of the map application determines that the server is able to process the text request, a token is generated for the text request, the token and acknowledgment information are returned to a server of the built-in voice assistant of the system of the mobile phone, and the server returns the text request, the information of the map application and the token to the client of the built-in voice assistant of the system of the mobile phone. The client of the built-in voice assistant of the system of the mobile phone calls a client of the map application and transfers the text request and the token to the client of the map application. The client of the map application sends the text request and the token to the server of the map application, and the server of the map application responds to the text request. Specifically, the text request is parsed into the task instruction of retrieving a route which has the Tsinghua university as a destination and passes the multicolored city, and returning a route planning result to the client of the map application after the route is planned. The route planning result as shown in Fig. 4b is presented to the user by the client of the map application.

It may be seen that the user calls the client of the voice assistant of the mapping application from the client of the built-in voice assistant of the system of the mobile phone as shown in Fig. 4a, so as to present the route planning result which obviously meets requirements of the user more accurately compared with a response result of the built-in voice assistant of the system of the mobile phone.

### Second Example

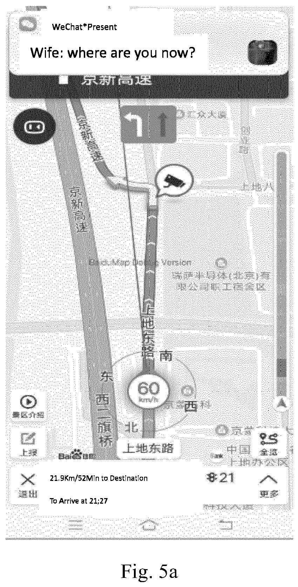

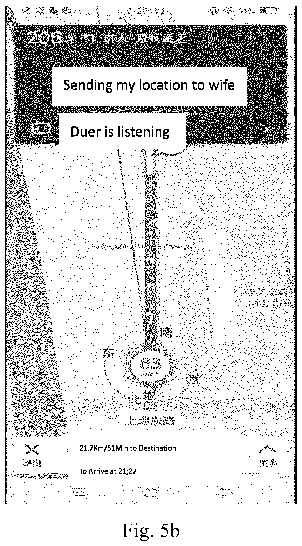

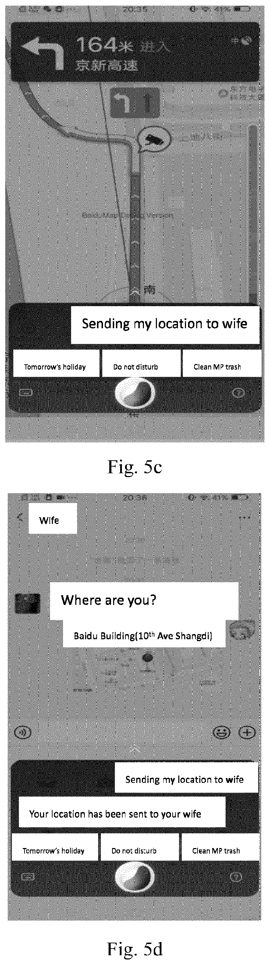

When using the client of the map application, the user receives a short message from his wife inquiring about location information, as shown in Fig. 5a. The user inputs a voice request "sending my location to wife" with the voice assistant function at the client of the map application, as shown in Fig. 5b. The client of the map application sends the voice request and the information list of the voice assistants installed on the mobile phone to the server of the map application, and the server of the map application recognizes the voice request and distributes a recognized text request to the server of each voice assistant according to the information list of the voice assistants. If the built-in voice assistant of the system of the mobile phone returns acknowledgment information and a token, the server of the map application sends the text request, information of the built-in voice assistant of the system of the mobile phone and the token to the client of the map application. The client of the map application calls the client of the built-in voice assistant of the system of the mobile phone and transfers the text request and the token, as shown in Fig. 5c. The client of the built-in voice assistant of the system of the mobile phone sends the text request and the token to the server, and the server parses the text request into the task instruction of calling the WeChat client to send the location information to the wife. Then, the task instruction is returned to the client of the built-in voice assistant of the system of the mobile phone. The client of the built-in voice assistant of the system of the mobile phone calls the WeChat client and transfers the task instruction of sending the location information to the wife, and then, the WeChat client executes the task instruction and sends the current location information to the wife, as shown in Fig. 5d.

It may be seen that after the user realizes the catching link and determines the target voice assistant from the client of the voice assistant of the map application shown in Fig. 5a, the client of the built-in voice assistant of the operating system is called to realize the understanding link and the performing link, and then, the client of the voice assistant of the operating system calls the WeChat to finally fulfill the voice request of the user. Demands of the user are unable to be met only by the client of the voice assistant of the map application.

The methods according to the present application are described above, and apparatuses according to the present application will be described below in detail in conjunction with embodiments.

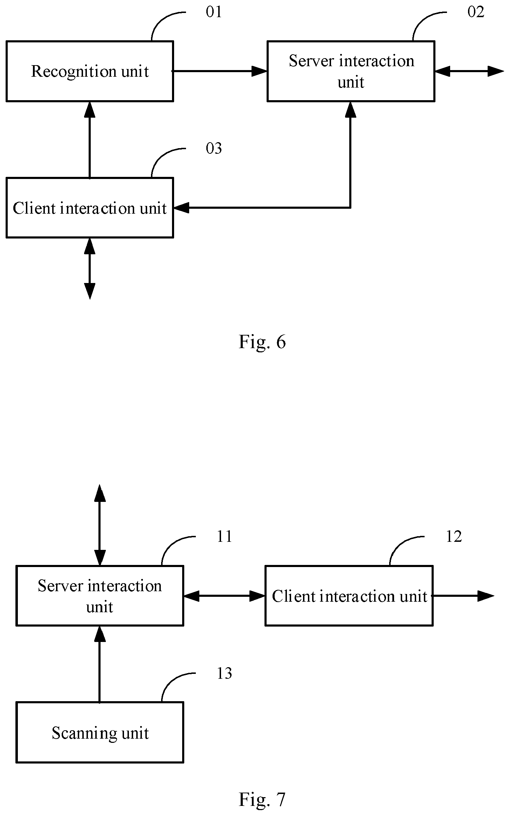

Fig. 6 is a schematic diagram of an apparatus for processing voices provided at a server of a first voice assistant according to an embodiment of the present application, and the apparatus may be configured as an application located on the server of the first voice assistant, or as a functional unit, such as a plug-in or software development kit (SDK) located in an application of the server of the first voice assistant. As shown in Fig. 6, the apparatus includes a recognition unit 01, a server interaction unit 02 and a client interaction unit 03. The main functions of each constitutional unit are as follows.

The client interaction unit 03 is configured to receive a voice request sent by a client of the first voice assistant.

The recognition unit 01 is configured to recognize the voice request received by the client interaction unit 03 to obtain a text request.

The server interaction unit 02 is configured to send the text request to a server of a second voice assistant; and receive token information generated and returned by the server of the second voice assistant for the text request.

The client interaction unit 03 is further configured to send the text request and the token information to the client of the first voice assistant, such that the client of the first voice assistant calls a client of the second voice assistant to respond to the text request based on the token information.

As a preferred implementation, the server interaction unit 02 is specifically configured to send the text request to a server of at least one other voice assistant; and determine information of the second voice assistant from the server of the other voice assistant which returns acknowledgment information, the acknowledgment information indicating that the server of the other voice assistant which sends the acknowledgment information is able to process the text request.

As a preferred implementation, the client interaction unit 03 may further receive an information list of voice assistants installed in a terminal device sent by the client of the first voice assistant. The client of the first voice assistant may scan the information list of the voice assistants installed in the terminal device when started and send the information list to the server of the first voice assistant, or may send the list of the voice assistants to the server of the first voice assistant together with the voice request.

Correspondingly, according to the received information list of the voice assistants, the server interaction unit 02 executes the operation of sending a recognized text request to a server of at least one other voice assistant.

In addition, the apparatus further includes a response processing unit (not shown). This unit may be configured to judge whether the server of the first voice assistant is able to process the text request, if not, trigger the server interaction unit 02 to send the recognized text request to the server of the second voice assistant, and if yes, respond to the text request and return a response result to the client of the first voice assistant.

When determining the information of the second voice assistant from the server of the other voice assistant which returns the acknowledgment information, the server interaction unit 02, if only one server of the other voice assistant which returns the acknowledgment information exists, determines the information of the voice assistant corresponding to the server as the information of the second voice assistant, and if a plurality of servers of the other voice assistants which return the acknowledgment information exist, selects the information of the voice assistant corresponding to one of the servers as the information of the second voice assistant.

Fig. 7 is a schematic diagram of an apparatus for processing voices provided at a client of the first voice assistant according to an embodiment of the present application, and the apparatus may be configured as an application located on the client of the first voice assistant, or as a functional unit, such as a plug-in or SDK located in an application of the client of the first voice assistant. As shown in Fig. 7, the apparatus may include a server interaction unit 11 and a client interaction unit 12, and may further include a scanning unit 13. The main functions of each constitutional unit are as follows.

The server interaction unit 11 is configured to send a voice request input by a user to the server of the first voice assistant; and receive a text request which is returned by the server of the first voice assistant and obtained by recognizing the voice request and information of a second voice assistant which is able to process the text request.

The client interaction unit 12 is configured to call a client of the second voice assistant to respond to the above-mentioned text request.

Preferably, the server interaction unit 11 may further receive token information returned by the server of the first voice assistant, the token information being generated by a server of the second voice assistant for the above-mentioned text request. The token information may be received together with the text request and the information of the second voice assistant.

Correspondingly, the client interaction unit 12 transfers the text request and the token information when the client of the second voice assistant is called.

The scanning unit 13 is configured to scan an information list of voice assistants installed in a terminal device where the client of the first voice assistant is located.

Correspondingly, the server interaction unit 11 sends the information list of the voice assistants to the server of the first voice assistant.

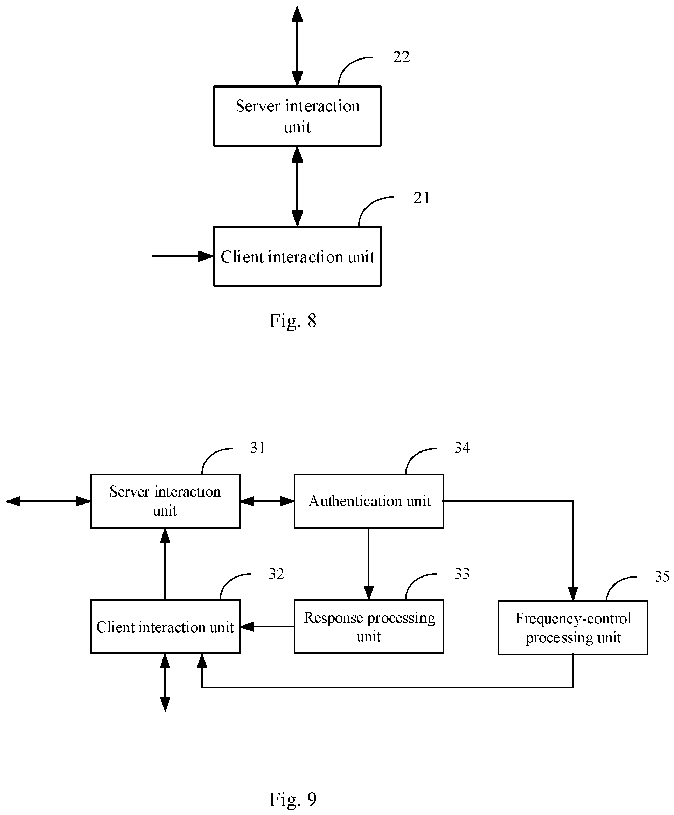

Fig. 8 is a schematic diagram of an apparatus for processing voices provided at a client of a second voice assistant according to an embodiment of the present application, and the apparatus may be configured as an application located on the client of the second voice assistant, or as a functional unit, such as a plug-in or SDK located in an application of the client of the second voice assistant. As shown in Fig. 8, the apparatus includes a client interaction unit 21 and a server interaction unit 22. The main functions of each constitutional unit are as follows.

The client interaction unit 21 is configured to receive a call by a client of a first voice assistant.

The server interaction unit 22 is configured to send a text request transferred by the call to a server of the second voice assistant; and receive a response result returned by the server of the second voice assistant for the text request.

Preferably, token information may also be transferred in the above-mentioned call; that is, when the client of the first voice assistant calls the client of the second voice assistant, transferred parameters include the text request and the token information.

Correspondingly, the server interaction unit 22 sends the token information and the text request to the server of the second voice assistant together, such that the server of the second voice assistant may perform authentication using the token information.

Fig. 9 is a schematic diagram of an apparatus provided at a server of the second voice assistant according to an embodiment of the present application, and the apparatus may be configured as an application located on the server of the second voice assistant, or as a functional unit, such as a plug-in or SDK located in an application of the server of the second voice assistant. As shown in Fig. 9, the apparatus includes a server interaction unit 31, a client interaction unit 32 and a response processing unit 33, and may further include an authentication unit 34 and a frequency-control processing unit 35. The main functions of each constitutional unit are as follows.

The server interaction unit 31 is configured to receive a text request sent by a server of a first voice assistant, the text request being obtained by recognizing a voice request by the server of the first voice assistant.

The authentication unit 34 is configured to generate token information for the text request. The token information may be generated by encrypting random information using a key and an encryption method known only to the server of the second voice assistant, so as to obtain the token information, as long as the uniqueness of the token information in the validity period is guaranteed and the token information is difficult to crack by other devices.

The server interaction unit 31 sends the token information to the server of the first voice assistant.

The client interaction unit 32 is configured to receive a text request sent by a client of the second voice assistant and the token information.

The authentication unit 34 is further configured to perform a check using the token information received by the client interaction unit 32 and the generated token information.

The response processing unit 33 is configured to, if the check is passed, respond to the text request.

If the check fails, the client interaction unit 32 does not respond to the text request, or returns check failure or response failure information to the client of the second voice assistant.

The client interaction unit 32 is further configured to return a response result of the text request to the client of the second voice assistant.

The above-mentioned token-based check may prevent an error call of the client of the second voice assistant by the client of the first voice assistant, and may also prevent the client of a malicious first voice assistant from calling the client of the second voice assistant for an attack. For example, if the client of the malicious first voice assistant calls the client of the second voice assistant to send an offensive text request for multiple times, since the client of the malicious first voice assistant is unable to know the token, the server of the second voice assistant does not respond to the malicious text request.

In addition to being used for the check, the token may be used for at least one of frequency control and/or a charging operation in the present application.

The frequency-control processing unit 35 is configured to perform a frequency control operation on the client of the second voice assistant, and if the number of the requests which are sent by the client of the second voice assistant and do not pass authentication exceeds a preset threshold within a set time, the client of the second voice assistant is placed into a blacklist. The client interaction unit 32 directly discards requests from the client in the blacklist.

The authentication unit 34 is further configured to record a corresponding relationship between the token information and information of the first voice assistant.

A charging unit (not shown) is configured to count the number of times of replacing the first voice assistant to respond to the text request based on corresponding relationship, and use this result as a charging basis for the first voice assistant. Specifically, the number of responses corresponding to the first voice assistant in the responses to the text request may be counted based on the corresponding relationship; the first voice assistant may be charged based on the number of responses.

According to the embodiments of the present application, there are also provided an electronic device and a readable storage medium.

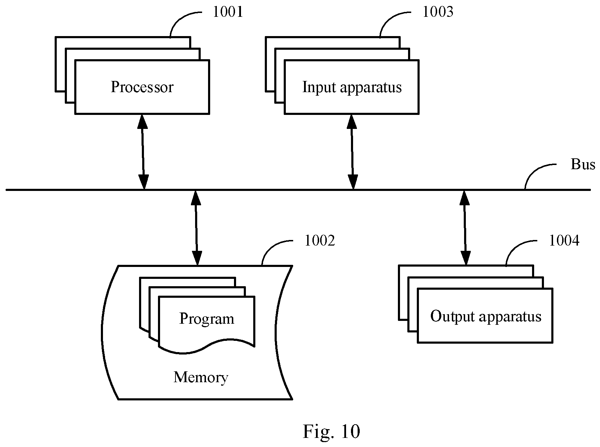

Fig. 10 is a block diagram of an electronic device for the method for processing voices according to the embodiments of the present application. The electronic device is intended to represent various forms of digital computers, such as laptop computers, desktop computers, workstations, personal digital assistants, servers, blade servers, mainframe computers, and other appropriate computers. The electronic device may also represent various forms of mobile apparatuses, such as personal digital processors, cellular telephones, smart phones, wearable devices, and other similar computing apparatuses. The components shown herein, their connections and relationships, and their functions, are meant to be exemplary only, and are not meant to limit implementation of the present application described and/or claimed herein.

As shown in Fig. 10, the electronic device includes one or more processors 1001, a memory 1002, and interfaces configured to connect the various components, including high-speed interfaces and low-speed interfaces. The various components are interconnected using different buses and may be mounted at a common motherboard or in other manners as desired. The processor may process instructions for execution within the electronic device, including instructions stored in or at the memory to display graphical information for a GUI at an external input/output apparatus, such as a display device coupled to the interface. In other implementations, plural processors and/or plural buses may be used with plural memories, if desired. Also, plural electronic devices may be connected, with each device providing some of necessary operations (for example, as a server array, a group of blade servers, or a multi-processor system). In Fig. 10, one processor 1001 is taken as an example.

The memory 1002 is configured as the non-transitory computer readable storage medium according to the present application. The memory stores instructions executable by the at least one processor to cause the at least one processor to perform a method for processing voices according to the present application. The non-transitory computer readable storage medium according to the present application stores computer instructions for causing a computer to perform the method for processing voices according to the present application.

The memory 1002 which is a non-transitory computer readable storage medium may be configured to store non-transitory software programs, non-transitory computer executable programs and modules, such as program instructions/modules corresponding to the method for processing voices according to the embodiments of the present application. The processor 1001 executes various functional applications and data processing of a server, that is, implements the method for processing voices according to the above-mentioned embodiments, by running the non-transitory software programs, instructions, and modules stored in the memory 1002.

The memory 1002 may include a program storage area and a data storage area, wherein the program storage area may store an operating system and an application program required for at least one function; the data storage area may store data created according to use of the electronic device for processing voices, or the like. Furthermore, the memory 1002 may include a high-speed random access memory, or a non-transitory memory, such as at least one magnetic disk storage device, a flash memory device, or other non-transitory solid state storage devices. In some embodiments, optionally, the memory 1002 may include memories remote from the processor 1001, and such remote memories may be connected to the electronic device for processing voices via a network. Examples of such a network include, but are not limited to, the Internet, intranets, local area networks, mobile communication networks, and combinations thereof.

The electronic device for the method for processing voices may further include an input apparatus 1003 and an output apparatus 1004. The processor 1001, the memory 1002, the input apparatus 1003 and the output apparatus 1004 may be connected by a bus or other means, and Fig. 10 takes the connection by a bus as an example.

The input apparatus 1003 may receive input numeric or character information and generate key signal input related to user settings and function control of the electronic device for processing voices, such as a touch screen, a keypad, a mouse, a track pad, a touch pad, a pointing stick, one or more mouse buttons, a trackball, a joystick, or the like. The output apparatus 1004 may include a display device, an auxiliary lighting apparatus (for example, an LED) and a tactile feedback apparatus (for example, a vibrating motor), or the like. The display device may include, but is not limited to, a liquid crystal display (LCD), a light emitting diode (LED) display, and a plasma display. In some implementations, the display device may be a touch screen.

Various implementations of the systems and technologies described here may be implemented in digital electronic circuitry, integrated circuitry, ASICs (application specific integrated circuits), computer hardware, firmware, software, and/or combinations thereof. These various implementations may be implemented in one or more computer programs which are executable and/or interpretable on a programmable system including at least one programmable processor, and the programmable processor may be special or general, and may receive data and instructions from, and transmitting data and instructions to, a storage system, at least one input apparatus, and at least one output apparatus.

These computer programs (also known as programs, software, software applications, or codes) include machine instructions for a programmable processor, and may be implemented using high-level procedural and/or object-oriented programming languages, and/or assembly/machine languages. As used herein, the terms "machine readable medium" and "computer readable medium" refer to any computer program product, device and/or apparatus (for example, magnetic discs, optical disks, memories, programmable logic devices (PLDs)) for providing machine instructions and/or data to a programmable processor, including a machine readable medium which receives machine instructions as a machine readable signal. The term "machine readable signal" refers to any signal for providing machine instructions and/or data to a programmable processor.

To provide interaction with a user, the systems and technologies described here may be implemented on a computer having: a display apparatus (for example, a CRT (cathode ray tube) or LCD (liquid crystal display) monitor) for displaying information to a user; and a keyboard and a pointing apparatus (for example, a mouse or a trackball) by which a user may provide input to the computer. Other kinds of apparatuses may also be used to provide interaction with a user; for example, feedback provided to a user may be any form of sensory feedback (for example, visual feedback, auditory feedback, or tactile feedback); and input from a user may be received in any form (including acoustic, voice or tactile input).

The systems and technologies described here may be implemented in a computing system (for example, as a data server) which includes a back-end component, or a computing system (for example, an application server) which includes a middleware component, or a computing system (for example, a user computer having a graphical user interface or a web browser through which a user may interact with an implementation of the systems and technologies described here) which includes a front-end component, or a computing system which includes any combination of such back-end, middleware, or front-end components. The components of the system may be interconnected through any form or medium of digital data communication (for example, a communication network). Examples of the communication network include: a local area network (LAN), a wide area network (WAN) and the Internet.

A computer system may include a client and a server. Generally, the client and the server are remote from each other and interact through the communication network. The relationship between the client and the server is generated by virtue of computer programs which are run on respective computers and have a client-server relationship to each other.

## Claims

1. A method for processing voices, comprising the following steps implemented by a server of a first voice assistant, a server of a second voice assistant and a terminal device comprising a client of the first voice assistant and a client of the second voice assistant:
receiving (203, 303) and recognizing (203, 303), by the server of the first voice assistant, a voice request to obtain a text request,
determining (204, 304), by the server of the first voice assistant, information of the second voice assistant which is able to process the text request, wherein the information of the second voice assistant which is able to process is determined based on a field of the text request or according to acknowledgement information from the server of the second voice assistant, the field of the text request being determined by simple keyword or semantic-based analysis of the text request, and sending (204, 304) the text request to the server of the second voice assistant;
receiving (205, 305), by the server of the first voice assistant, token information for authentication generated and returned by the server of the second voice assistant for the text request;
sending (206) the text request, the information of the second voice assistant which is able to process the text request, and the token information to the client of the first voice assistant for the client of the first voice assistant to call (207, 308), based on the information of the second voice assistant which is able to process the text request, the
client of the second voice assistant to provide a response to the text request based on the token information,
receiving (204, 304), by the server of the second voice assistant, the text request sent by the server of the first voice assistant, the text request being obtained (301-303) by the server of the first voice assistant and sent on the premise of determining information of the second voice assistant which is able to process the text request;
generating (205, 305), by the server of the second voice assistant, token information for authentication for the text request, and sending (205, 305) the token information to the server of the first voice assistant;
receiving (309), by the server of the second voice assistant, the text request sent by the client of the second voice assistant and the token information; and
performing (310) , by the server of the second voice assistant, authentication based on the received token information and the generated token information, and if a check is passed, responding (311) to the text request, and returning a response result of the text request to the client of the second voice assistant for the client of the first voice assistant to call the client of the second voice assistant, the calling being implemented by the client of the first voice assistant based on the information of the second voice assistant which is able to process the text request, wherein the information of the second voice assistant which is able to process the text request is received from the server of the first voice assistant.

2. The method according to claim 1, further comprising: receiving an information list of voice assistants installed in a terminal device sent by the client of the first voice assistant; and
executing the step of sending the text request to a server of at least one other voice assistant according to the information list of the voice assistants.

3. The method according to claim 1, wherein the determining, by the server of the first voice assistant, information of the second voice assistant which is able to process the text request comprises:
recognizing the field of the text request by the server of the first voice assistant; and
determining information of the voice assistant corresponding to the recognized field as the information of the second voice assistant.

4. The method according to claim 1, before the sending a recognized text request to a server of a second voice assistant, further comprising:
judging whether the server of the first voice assistant is able to process the text request, if not, continuing to execute the step of sending a recognized text request to a server of a second voice assistant, and if yes, responding to the text request and returning a response result to the client of the first voice assistant.

5. The method according to claim 1, wherein the responding to the text request comprises:
parsing the text request into a task instruction, and executing a corresponding task processing operation according to the task instruction; or
parsing the text request into a task instruction, and returning the task instruction and information of a non-voice assistant executing the task instruction to the client of the second voice assistant, such that the client of the second voice assistant calls a client of the non-voice assistant to execute the task instruction.

6. The method according to claim 1, further comprising:
performing a frequency control operation on the client of the second voice assistant, and if the number of the requests which are sent by the client of the second voice assistant and do not pass authentication exceeds a preset threshold within a set time, placing the client of the second voice assistant into a blacklist.

7. The method according to claim 1, further comprising:
recording, by the server of the second voice assistant, a corresponding relationship between the token information and information of the first voice assistant;
counting the number of responses corresponding to the first voice assistant in the responses to the text request based on the corresponding relationship; and
charging the first voice assistant based on the number of responses.

8. A system, comprising an apparatus for processing voices provided at a server of a first voice assistant and an apparatus for processing voices provided at a server of a second voice assistant and a terminal device comprising a client of the first voice assistant and a client of the second voice assistant,
the apparatus for processing voices provided at the server of the first voice assistant comprising:
a first client interaction unit (03) configured to receive a voice request from the client of the first voice assistant;
a recognition unit (01) configured to recognize the voice request to obtain a text request; **characterized in that** the apparatus further comprises:
a server interaction unit (02) configured to determine information of the second voice assistant which is able to process the text request, wherein the information of the second voice assistant which is able to process is determined based on a field of the text request or according to
acknowledgement information from the server of the second voice assistant, the field of the text request being determined by simple keyword or semantic-based analysis of the text request, send the text request to the server of the second voice assistant; and receive token information for authentication from the server of the second voice assistant for the text request;
wherein the first client interaction unit is further configured to send the text request, the information of the second voice assistant which is able to process the text request, and the token information to the client of the first voice assistant, for the client of the first voice assistant to call, based on the information of the second voice assistant which is able to process the text request, the client of the second voice assistant to provide a response to the text request based on the token information, and
the apparatus for processing voices provided at the server of the second voice assistant comprising:
a server interaction unit (22) configured to receive the text request from the server of the first voice assistant, the text request being obtained by the server of the first voice assistant; and sending token information for authentication generated by an authentication unit (34) to the server of the first voice assistant and sent on the premise of determining information of the second voice assistant which is able to process the text request;
the authentication unit (34) configured to generate the token information for the text request; performing a check using token information received by a second client interaction unit (21) and the generated token information;
the second client interaction unit (21) configured to receive the text request from the client of the second voice assistant and the token information; return a response result of a response processing unit (33) to the text request to the client of the second voice assistant for the client of the first voice assistant to call the second voice assistant, the calling being implemented by the client of the first voice assistant based on the information of the second voice assistant which is able to process the text request, wherein the information of the second voice assistant which is able to process the text request is received from the server of the first voice assistant; and
the response processing unit (33) configured to, if the check is passed, respond to the text request.

## Patentansprüche

1. Verfahren zur Sprachverarbeitung mit den folgenden Schritten, implementiert durch einen Server eines ersten Sprachassistenten, einen Server eines zweiten Sprachassistenten und ein Endgerät, das einen Client des ersten Sprachassistenten und einen Client des zweiten Sprachassistenten aufweist:
Empfangen (203, 303) und Erkennen (203, 303), durch den Server des ersten Sprachassistenten, einer Sprachanfrage zum Erhalten einer Textanfrage,
Bestimmen (204, 304), durch den Server des ersten Sprachassistenten, von Informationen des zweiten Sprachassistenten, der in der Lage ist, die Textanfrage zu verarbeiten, wobei die Informationen des zweiten Sprachassistenten, der zur Verarbeitung in der Lage ist, basierend auf einem Gebiet der Textanfrage oder gemäß Bestätigungsinformationen des Servers des zweiten Sprachassistenten bestimmt werden, wobei das Gebiet der Textanfrage durch einfache schlüsselwort- oder semantik-basierte Analyse der Textanfrage bestimmt wird, und Senden (204, 304) der Textanfrage an den Server des zweiten Sprachassistenten;
Empfangen (205, 305), durch den Server des ersten Sprachassistenten, von Token-Informationen zur Authentifizierung, welche von dem Server des zweiten Sprachassistenten für die Textanfrage erzeugt und rückgesendet wurden;
Senden (206) der Textanforderung, der Informationen des zweiten Sprachassistenten, der zur Verarbeitung der Textanforderung geeignet ist, und der Token-Informationen an den Client des ersten Sprachassistenten, um den Client des ersten Sprachassistenten, basierend auf den Informationen des zweiten Sprachassistenten, der in der Lage ist, die Textanfrage zu verarbeiten, zu veranlassen, den Client des zweiten Sprachassistenten anzurufen (207, 308), um eine Antwort auf die Textanfrage basierend auf den Token-Informationen zu liefern;
Empfangen (204, 304), durch den Server des zweiten Sprachassistenten, der von dem Server des ersten Sprachassistenten gesendeten Textanfrage, wobei die Textanfrage von dem Server des ersten Sprachassistenten erhalten wird (301-303) und unter der Voraussetzung der Bestimmung von Informationen des zweiten Sprachassistenten, der in der Lage ist, die Textanfrage zu verarbeiten, gesendet wird;
Erzeugen (205, 305), durch den Server des zweiten Sprachassistenten, von Token-Informationen zur Authentifizierung für die Textanfrage, und Senden (205, 305) der Token-Informationen an den ersten Sprachassistenten;
Empfangen (309), durch den Server des zweiten Sprachassistenten, der von dem Client des zweiten Sprachassistenten gesendeten Textanfrage und der Token-Informationen; und
Durchführen (310), durch den Server des zweiten Sprachassistenten, einer Authentifizierung basierend auf den empfangenen Token-Informationen und den erzeugten Token-Informationen, und, falls eine Prüfung erfolgreich ist, Antworten (311) auf die Textanfrage, und Rücksenden eines Antwortergebnisses der Textanfrage an den Client des zweiten Sprachassistenten, um den Client des ersten Sprachassistenten zu veranlassen, den Client des zweiten Sprachassistenten anzurufen, wobei der Anruf durch den Client des ersten Sprachassistenten basierend auf den Informationen des zweiten Sprachassistenten, welcher in der Lage ist, die Textanfrage zu verarbeiten, implementiert wird, wobei die Informationen des zweiten Sprachassistenten, welcher in der Lage ist, die Textanfrage zu verarbeiten, von dem Server des ersten Sprachassistenten aus empfangen werden.

2. Verfahren nach Anspruch 1, ferner mit den Schritten:
Empfangen einer von dem Client des ersten Sprachassistenten gesendeten Informationsliste der in einem Endgerät installierten Sprachassistenten; und
Ausführen des Schritts des Sendens der Textanfrage an einen Server mindestens eines anderen Sprachassistenten gemäß der Informationsliste der Sprachassistenten.

3. Verfahren nach Anspruch 1, bei welchem das Bestimmen, durch den Server des ersten Sprachassistenten, von Informationen des zweiten Sprachassistenten, der in der Lage ist, die Textanfrage zu verarbeiten, die folgenden Schritte aufweist:
Erkennen des Gebiets der Textanfrage durch den Server des ersten Sprachassistenten; und
Bestimmen von dem erkannten Gebiet entsprechenden Informationen des Sprachassistenten als die Informationen des zweiten Sprachassistenten.

4. Verfahren nach Anspruch 1, ferner mit dem vor dem Senden einer erkannten Textanfrage an einen Server eines zweiten Sprachassistenten erfolgenden Schritt:
Beurteilen, ob der Server des ersten Sprachassistenten in der Lage ist, die Textanfrage zu verarbeiten; falls nicht, Fortsetzen des Schritts des Sendens einer erkannten Textanfrage an einen Server eines zweiten Sprachassistenten; und falls doch, Antworten auf die Textanfrage und Rücksenden eines Antwortergebnisses an den Client des ersten Sprachassistenten.

5. Verfahren nach Anspruch 1, bei welchem das Antworten auf die Textanfrage die folgenden Schritte aufweist:
Parsen der Textanfrage in einen Aufgabenbefehl, und Ausführen einer entsprechenden Aufgabenverarbeitungsoperation gemäß dem Aufgabenbefehl; und
Parsen der Textanfrage in einen Aufgabenbefehl und Rücksenden des Aufgabenbefehls und Informationen eines den Aufgabenbefehl ausführenden Nicht-Sprachassistenten an den Client des zweiten Sprachassistenten, derart, dass der Client des zweiten Sprachassistenten einen Client des Nicht-Sprachassistenten zur Ausführung des Aufgabenbefehls anruft.

6. Verfahren nach Anspruch 1, ferner mit dem Schritt:
Durchführen einer Frequenzregeloperation an dem Client des zweiten Sprachassistenten, und wenn die Anzahl der Anforderungen, welche von dem Client des zweiten Sprachassistenten gesendet werden und die Authentifizierung nicht bestehen, einen voreingestellten Schwellenwert innerhalb einer vorgegebenen Zeit übersteigt, Setzen des Clients des zweiten Sprachassistenten auf eine Sperrliste.

7. Verfahren nach Anspruch 1, ferner mit den Schritten:
Aufzeichnen, durch den Server des zweiten Sprachassistenten, einer entsprechenden Beziehung zwischen den Token-Informationen und Informationen des ersten Sprachassistenten;
Zählen der Anzahl von dem ersten Sprachassistenten entsprechenden Antworten in den Antworten auf die Textanfrage basierend auf der entsprechenden Beziehung; und
Belasten des ersten Sprachassistenten basierend auf der Anzahl der Antworten.

8. System mit einer Vorrichtung zur Sprachverarbeitung, vorgesehen in einem Server eines ersten Sprachassistenten, und einer Vorrichtung zur Sprachverarbeitung, vorgesehen in einem Server eines zweiten Sprachassistenten, und einem Endgerät mit einem Client des ersten Sprachassistenten und einem Client des zweiten Sprachassistenten, wobei die Vorrichtung zur Sprachverarbeitung, die in dem Server des ersten Sprachassistenten vorgesehen ist, aufweist:
eine erste Client-Interaktionseinheit (03), die zum Empfangen einer Sprachanfrage von dem Client des ersten Sprachassistenten ausgebildet ist;
eine Erkennungseinheit (01), die zum Erkennen der Sprachanfrage für das Erhalten einer Textanfrage ausgebildet ist;
**dadurch gekennzeichnet, dass** die Vorrichtung ferner aufweist:
eine Server-Interaktionseinheit (02), die dazu ausgebildet ist, Informationen des zweiten Sprachassistenten, der in der Lage ist, die Textanfrage zu verarbeiten, zu bestimmen, wobei die Informationen des zweiten Sprachassistenten, der zur Verarbeitung in der Lage ist, basierend auf einem Gebiet der Textanfrage oder gemäß Bestätigungsinformationen des Servers des zweiten Sprachassistenten bestimmt werden, wobei das Gebiet der Textanfrage durch einfache schlüsselwort- oder semantik-basierte Analyse der Textanfrage bestimmt wird, die Textanfrage an den Server des zweiten Sprachassistenten zu senden, und Token-Informationen zur Authentifizierung von dem Server des zweiten Sprachassistenten für die Textanfrage zu empfangen;
wobei die erste Client-Interaktionseinheit ferner dazu ausgebildet ist, die Textanforderung, die Informationen des zweiten Sprachassistenten, der zur Verarbeitung der Textanforderung geeignet ist, und die Token-Informationen an den Client des ersten Sprachassistenten zu senden, um den Client des ersten Sprachassistenten, basierend auf den Informationen des zweiten Sprachassistenten, der in der Lage ist, die Textanfrage zu verarbeiten, zu veranlassen, den Client des zweiten Sprachassistenten anzurufen, um eine Antwort auf die Textanfrage basierend auf den Token-Informationen zu liefern; und
wobei die Vorrichtung zur Sprachverarbeitung, die in dem Server des zweiten Sprachassistenten vorgesehen ist, aufweist:
eine Server-Interaktionseinheit (22), die dazu ausgebildet ist, die von dem Server des ersten Sprachassistenten gesendete Textanfrage zu empfangen, wobei die Textanfrage von dem Server des ersten Sprachassistenten erhalten wird, und Token-Informationen zur Authentifizierung, welche von einer Authentifizierungseinheit (34) erzeugt und unter der Voraussetzung der Bestimmung von Informationen des zweiten Sprachassistenten, der in der Lage ist, die Textanfrage zu verarbeiten, gesendet werden, an den Server des ersten Sprachassistenten zu senden;
wobei die Authentifizierungseinheit (34) dazu ausgebildet ist, die Token-Informationen für die Textanfrage zu erzeugen, und eine Prüfung unter Verwendung von Token-Informationen, welche von einer zweiten Client-Interaktionseinheit (21) empfangen werden, und der erzeugten Token-Informationen durchzuführen:
wobei die zweite Client-Interaktionseinheit (21) dazu ausgebildet ist, die Textanfrage von dem Client des zweiten Sprachassistenten und die Token-Informationen zu empfangen, ein Antwortergebnis einer Antwortverarbeitungseinheit (33) auf die Textanfrage an den Client des zweiten Sprachassistenten zurückzusenden, um den Client des ersten Sprachassistenten zu veranlassen, den Client des zweiten Sprachassistenten anzurufen, wobei der Anruf durch den Client des ersten Sprachassistenten basierend auf den Informationen des zweiten Sprachassistenten, welcher in der Lage ist, die Textanfrage zu verarbeiten, implementiert wird, wobei die Informationen des zweiten Sprachassistenten, welcher in der Lage ist, die Textanfrage zu verarbeiten, von dem Server des ersten Sprachassistenten aus empfangen werden; und
wobei die Antwortverarbeitungseinheit (33) dazu ausgebildet ist, bei erfolgreicher Prüfung, auf die Textanfrage zu antworten.

## Revendications

1. Procédé de traitement de voix, comprenant les étapes suivantes mises en oeuvre par un serveur d'un premier assistant vocal, un serveur d'un second assistant vocal et un dispositif terminal comprenant un client du premier assistant vocal et un client du second assistant vocal :
la réception (203, 303) et la reconnaissance (203, 303), par le serveur du premier assistant vocal, d'une demande vocale pour obtenir une demande de texte,
la détermination (204, 304), par le serveur du premier assistant vocal, d'informations du second assistant vocal en mesure de traiter la demande de texte, dans lequel les informations du second assistant vocal pouvant être traitées sont déterminées sur la base d'un champ de la demande de texte ou selon des informations d'accusé de réception provenant du serveur du second assistant vocal, le champ de la demande de texte étant déterminé par simple mot clé ou analyse basée sur la sémantique de la demande de texte, et l'envoi (204, 304) de la demande de texte au serveur du second assistant vocal ;
la réception (205, 305), par le serveur du premier assistant vocal, d'informations de jeton pour authentification générées et renvoyées par le serveur du second assistant vocal correspondant à la demande de texte ;
l'envoi (206) de la demande de texte, des informations du second assistant vocal en mesure de traiter la demande de texte, et des informations de jeton au client du premier assistant vocal pour que le client du premier assistant vocal appelle (207, 308), sur la base des informations du second assistant vocal en mesure de traiter la demande de texte, le client du second assistant vocal pour fournir une réponse à la demande de texte sur la base des informations de jeton,
la réception (204, 304), par le serveur du second assistant vocal, de la demande de texte envoyée par le serveur du premier assistant vocal, la demande de texte étant obtenue (301-303) par le serveur du premier assistant vocal et envoyée sur le fondement de la détermination des informations du second assistant vocal en mesure de traiter la demande de texte ;
la génération (205, 305), par le serveur du second assistant vocal, des informations de jeton pour authentification de la demande de texte, et l'envoi (205, 305) des informations de jeton au serveur du premier assistant ;
la réception (309), par le serveur du second assistant vocal, de la demande de texte envoyée par le client du second assistant vocal et des informations de jeton ; et
la réalisation (310), par le serveur du second assistant vocal, d'une authentification sur la base des informations de jeton reçues et des informations de jeton générées, et si un contrôle est réussi, la réponse (311) à la demande de texte, et le renvoi d'un résultat de réponse à la demande de texte au client du second assistant vocal pour que le client du premier assistant vocal appelle le client du second assistant vocal, l'appel étant mis en oeuvre par le client du premier assistant vocal sur la base des informations du second assistant vocal en mesure de traiter la demande de texte, dans lequel les informations du second assistant vocal en mesure de traiter la demande de texte sont reçues du serveur du premier assistant vocal.

2. Procédé selon la revendication 1, comprenant en outre : la réception d'une liste d'informations des assistants vocaux installés dans un dispositif terminal envoyé par le client du premier assistant vocal ; et
l'exécution de l'étape d'envoi de la demande de texte à un serveur d'au moins un autre assistant vocal selon la liste d'informations des assistants vocaux.

3. Procédé selon la revendication 1, dans lequel la détermination, par le serveur du premier assistant vocal, d'informations du second assistant vocal en mesure de traiter la demande de texte comprend :
la reconnaissance du champ de la demande de texte par le serveur du premier assistant vocal ; et
la détermination d'informations de l'assistant vocal correspondant au champ reconnu en tant qu'informations du second assistant vocal.

4. Procédé selon la revendication 1, avant l'envoi d'une demande de texte reconnue à un serveur d'un second assistant vocal, comprenant en outre :
l'estimation du fait de savoir si le serveur du premier assistant vocal est en mesure de traiter la demande de texte, si non, la poursuite d'exécuter l'étape d'envoi d'une demande de texte reconnue à un serveur d'un second assistant vocal, et si oui, la réponse à la demande de texte et le renvoi d'un résultat de réponse au client du premier assistant vocal.

5. Procédé selon la revendication 1, dans lequel la réponse à la demande de texte comprend :
l'analyse de la demande de texte dans une instruction de tâche, et l'exécution d'une opération de traitement de tâche correspondante selon l'instruction de tâche ; ou
l'analyse de la demande de texte dans une instruction de tâche, et le renvoi de l'instruction de tâche et des informations d'un assistant non vocal exécutant l'instruction de tâche au client du second assistant vocal, de telle sorte que le client du second assistant vocal appelle un client de l'assistant non vocal pour exécuter l'instruction de tâche.

6. Procédé selon la revendication 1, comprenant en outre :
la réalisation d'une opération de commande de fréquence sur le client du second assistant vocal, et si le nombre des demandes qui sont envoyées par le client du second assistant vocal et qui ne réussissent pas l'authentification dépasse un seuil prédéfini dans un temps défini, le placement du client du second assistant vocal dans une liste noire.

7. Procédé selon la revendication 1, comprenant en outre :
l'enregistrement, par le serveur du second assistant vocal, d'une relation correspondante entre les informations de jeton et les informations du premier assistant vocal ;
le compte du nombre de réponses correspondant au premier assistant vocal dans les réponses à la demande de texte sur la base de la relation correspondante ; et
la tarification du premier assistant vocal sur la base du nombre de réponses.

8. Système, comprenant un appareil de traitement de voix fournies au niveau d'un serveur d'un premier assistant vocal et un appareil de traitement de voix fournies au niveau d'un serveur d'un second assistant vocal et un dispositif terminal comprenant un client du premier assistant vocal et un client du second assistant vocal,
l'appareil de traitement de voix fournies au niveau du serveur du premier assistant vocal comprenant :
une première unité d'interaction client (03) configurée pour recevoir une demande vocale provenant du client du premier assistant vocal ;
une unité de reconnaissance (01) configurée pour reconnaître la demande vocale pour obtenir une demande de texte ;
**caractérisé en ce que** l'appareil comprend en outre :
une unité d'interaction serveur (02) configurée pour déterminer des informations du second assistant vocal en mesure de traiter la demande de texte, dans lequel les informations du second assistant vocal pouvant être traitées sont déterminées sur la base d'un champ de la demande de texte ou selon des informations d'accusé de réception provenant du serveur du second assistant vocal, le champ de la demande de texte étant déterminé par simple mot clé ou analyse basée sur la sémantique de la demande de texte, envoyer la demande de texte au serveur du second assistant vocal ; et recevoir des informations de jeton pour authentification provenant du serveur du second assistant vocal correspondant à la demande de texte ;
dans lequel la première unité d'interaction client est en outre configurée pour envoyer la demande de texte, les informations du second assistant vocal en mesure de traiter la demande de texte, et les informations de jeton au client du premier assistant vocal, pour que le client du premier assistant vocal appelle, sur la base des informations du second assistant vocal en mesure de traiter la demande de texte, le client du second assistant vocal pour fournir une réponse à la demande de texte sur la base des informations de jeton, et
l'appareil de traitement de voix fournies au niveau du serveur du second assistant vocal comprenant :
une unité d'interaction serveur (22) configurée pour recevoir la demande de texte du serveur du premier assistant vocal, la demande de texte étant obtenue par le serveur du premier assistant ; et l'envoi d'informations de jeton pour une authentification générée par une unité d'authentification (34) au serveur du premier assistant vocal et envoyée sur le fondement de la détermination d'informations du second assistant vocal en mesure de traiter la demande de texte ;
l'unité d'authentification (34) configurée pour générer les informations de jeton correspondant à la demande de texte ; la réalisation d'un contrôle à l'aide des informations de jeton reçues par une seconde unité d'interaction client (21) et des informations de jeton générées ;
la seconde unité d'interaction client (21) configurée pour recevoir la demande de texte du client du second assistant vocal et les informations de jetons, le renvoi d'un résultat de réponse d'une unité de traitement de réponse (33) à la demande de texte au client du second assistant vocal pour que le client du premier assistant vocal appelle le second assistant vocal, l'appel étant mis en oeuvre par le client du premier assistant vocal sur la base des informations du second assistant vocal en mesure de traiter la demande de texte, dans lequel les informations du second assistant vocal en mesure de traiter la demande de texte sont reçues du serveur du premier assistant vocal ; et
l'unité de traitement de réponse (33) configurée pour, si le contrôle est réussi, répondre à la demande de texte.
